Europäisches Patentamt

**European Patent Office**

Office européen des brevets

(11) Numéro de publication : **0 018 892
B1**

# FASCICULE DE BREVET EUROPÉEN

(45) Date de publication du fascicule du brevet :
**11.05.83**

(51) Int. Cl.³ : **F 02 C   7/28**, F 01 D   9/02,
F 01 D  11/00// F23R3/60

(21) Numéro de dépôt : **80400555.1**

(22) Date de dépôt : **24.04.80**

(54) **Dispositif d'étanchéité entre deux éléments de turbomachine.**

(30) Priorité : **02.05.79 FR 7911527**

(43) Date de publication de la demande :
**12.11.80 Bulletin 80/23**

(45) Mention de la délivrance du brevet :
**11.05.83 Bulletin 83/19**

(84) Etats contractants désignés :
**DE FR GB SE**

(56) Documents cités :
**FR A 2 228 967
FR A 2 246 782
GB A 1 126 468**

(73) Titulaire : **SOCIETE NATIONALE D'ETUDE ET DE
CONSTRUCTION DE MOTEURS D'AVIATION,
"S.N.E.C.M.A."
2 Boulevard Victor
F-75015 Paris (FR)**

(72) Inventeur : **Camboulives, Andre Alphonse Mederic
Leon
25, rue Jenner
F-91600 Savigny Sur Orge (FR)**
Inventeur : **Hallinger, Claude Christian
219, avenue de la Libération
F-77350 Le Mee Sur Seine (FR)**
Inventeur : **Vandenbroucke, Roger Alfred Jules
12, rue Racine
F-92160 Antony (FR)**

(74) Mandataire : **Moinat, François et al
S.N.E.C.M.A. Service des Brevets Boîte Postale 81
F-91003 Evry Cedex (FR)**

Jouve, 18, rue St-Denis, 75001 Paris, France

Dispositif d'étanchéité entre deux éléments de turbomachine

La présente invention a pour objet un dispositif d'étanchéité entre deux éléments de turbomachine, traversée par des gaz, notamment entre une chambre de combustion et un support de distributeur haute pression, ce dispositif comportant une virole indépendante prenant appui par des portées respectivement sur les éléments à relier de façon étanche, les deux éléments de turbomachine étant sensiblement coaxiaux et espacés axialement pour constituer un premier ensemble, et ladite virole constituant un second ensemble s'étendant coaxialement au premier ensemble sur une longueur supérieure à celle de l'espace séparant les deux éléments du premier ensemble.

Pour assurer un contrôle optimal du débit de fuite de l'air de refroidissement, qui est particulièrement critique sur les petits moteurs et des migrations de gaz chauds à la jonction d'une chambre de combustion et d'un carter de support d'un distributeur haute pression dans une turbomachine, il faut réaliser une étanchéité efficace entre ces deux éléments.

Les organes à la jonction du distributeur de turbine et de la chambre de combustion ont le plus souvent des déplacements relatifs radiaux et axiaux importants. Ces déplacements sont en général créés principalement par les différences de température des organes en fonctionnement transitoire et par les différences de coefficients de dilatation des matériaux.

Les écarts en fonctionnement stabilisé sont eux moins importants, mais ils sont fonction aussi de la technologie choisie. Il faut noter également que ces déplacements relatifs en fonctionnement transitoire et stabilisé ne sont pas identiques d'un moteur à l'autre en raison des tolérances de fabrication.

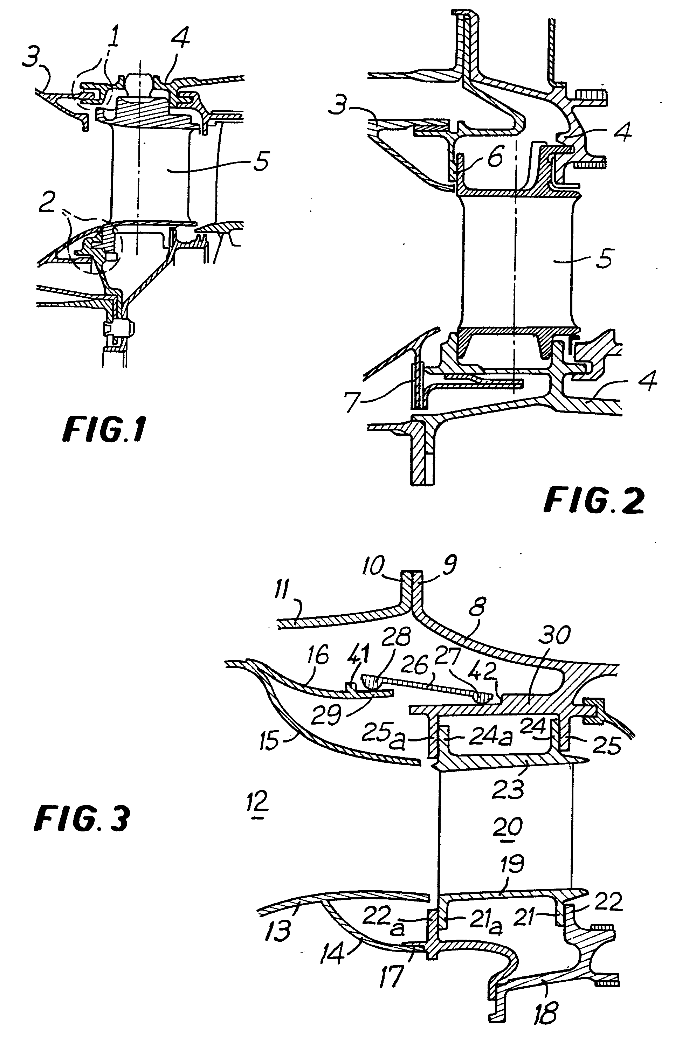

L'étanchéité est en général assurée par un dispositif d'assemblage en « fourchette », ainsi qu'il est représenté en 1 et 2 à la figure 1 qui représente un extrait en coupe longitudinale d'une turbomachine dont la chambre de combustion 3 est reliée au carter 4 de support du distributeur 5 par ledit dispositif d'assemblage.

Ce dispositif d'assemblage à « fourchette » impose des tolérances d'ajustement serrées sans qu'on puisse pour autant, dans la plupart des cas, maîtriser totalement les jeux de fonctionnement des éléments en présence et donc le contrôle des débits de fuite.

On connaît par le brevet GB-A-1 126 468 un collecteur annulaire pour gaz de combustion utilisant un dispositif à fourchette du type décrit à la figure 1 pour relier une virole soudée intérieurement sur la chambre de combustion à la structure supportant le distributeur à haute pression. Cette virole, qui n'est pas indépendante, est reliée, par des bandes axiales soudées, à une autre virole fixe placée intérieurement. Des matériaux à coefficient de dilatation différent sont utilisés pour réaliser les deux viroles et les bandes axiales respectivement, en vue de maintenir concentriques la chemise de la chambre de combustion, le rotor et la couronne d'aubes de stator, lors des dilatations thermiques en fonctionnement.

Il existe également un dispositif d'étanchéité représenté à la figure 2, dans lequel la chambre de combustion 3 est reliée au carter 4 de support du distributeur 5 par un dispositif à flasques fixe ou mobile 6 et 7. Toutefois, le dispositif d'assemblage par joints à flasques radiaux impose des tolérances d'ajustement très sévères donc coûteuses. Le jeu réduit nécessaire pour obtenir une étanchéité satisfaisante ne peut être obtenu qu'au prix de tolérances sévères.

On connaît également un dispositif de liaison étanche comprenant des brides et des boulons. Un tel dispositif boulonné est plus simple, mais il est plus lourd et il engendre en fonctionnement des contraintes mécaniques sévères et ne permet pas toujours de respecter les impératifs de montage et de démontage.

Le dispositif d'étanchéité perfectionné suivant l'invention a pour but de remédier à ces inconvénients.

Ainsi certaines zones du carter du support du distributeur à haute pression et de la chambre de combustion atteignant en fonctionnement une température très voisine, on pourrait, par le choix pour ces éléments de matériaux différents ou ayant un coefficient de dilatation différent, limiter, voire rendre nul en fonctionnement l'écart radial entre ces deux éléments en utilisant alors le système à « fourchette ». Mais dans la plupart des cas, les matériaux acceptables pour l'environnement, même différents, ont souvent des coefficients de dilatation très proches et les jeux et tolérances nécessaires à la fabrication et au montage ne permettent pas d'assurer l'étanchéité par le simple écart de dilatation des pièces en présence, d'où le dispositif perfectionné suivant l'invention.

Conformément à l'invention, le dispositif d'étanchéité est caractérisé en ce que la virole est réalisée en un matériau dont le coefficient de dilatation thermique diffère de celui des éléments constituant le premier ensemble de telle sorte que celui des ensembles qui est placé extérieurement présente un coefficient de dilatation thermique inférieur à celui de l'ensemble placé à son intérieur et produit sur celui-ci, à la température de fonctionnement un effort de serrage par l'intermédiaire de portées radiales de la virole, prenant appui respectivement sur les éléments à relier de façon étanche.

Suivant un mode de réalisation de l'invention l'ensemble placé extérieurement est constitué par la virole prenant appui par des portées sur les éléments du premier ensemble, la virole étant réalisée en un matériau dont le coefficient de dilatation thermique est inférieur à celui des éléments du premier ensemble.

Cette virole en fonctionnement assure une compression sur toute la périphérie du support de distributeur haute pression en amont, et sur une bride en aval de la chambre, et assure donc une étanchéité efficace aux gaz chauds et à l'air de refroidissement.

D'autres caractéristiques et avantages de l'invention seront mieux compris à la lecture de la description qui va suivre de plusieurs exemples de réalisation et en se référant aux dessins annexés, dans lesquels :

la figure 1 est une vue en coupe longitudinale d'une turbomachine comportant un moyen d'assemblage étanche connu à « fourchette » ;

la figure 2 est une vue en coupe longitudinale d'une turbomachine comportant un moyen d'assemblage étanche connu à flasques ;

la figure 3 est une vue en coupe longitudinale du dispositif d'étanchéité suivant l'invention monté entre une chambre de combustion et un support de distributeur haute pression ;

la figure 4 est une variante de réalisation du dispositif d'étanchéité représenté à la figure 3 ;

la figure 5 est une variante de réalisation du dispositif d'étanchéité suivant l'invention dans laquelle la virole est disposée à l'intérieur et présente un coefficient de dilatation élevé.

A la figure 3, on a représenté une partie d'une turbomachine au droit du distributeur haute pression et qui comprend un carter de turbine 8 qui est solidarisé par une bride 9 et une bride 10 à un carter 11 d'une chambre de combustion 12 qui comporte un mélangeur interne 13 muni d'une virole 14 et un mélangeur externe 15 muni d'une virole 16. La virole 14 du mélangeur interne 13 est solidarisée en 17 avec un porte-labyrinthe 18 sur lequel est fixé un talon inférieur 19 d'une aube 20 du distributeur haute pression, ledit talon inférieur présentant deux portées 21, 21a formant étanchéité avec des brides 22, 22a du porte-labyrinthe 18.

L'aube 20 présente un talon supérieur 23 présentant deux portées 24, 24a qui forment étanchéité avec des brides 25, 25a d'un carter 30 de support relié au carter de turbine 8.

Pour assurer l'étanchéité conformément à l'invention, il est prévu entre la virole 16 du mélangeur externe 15 de la chambre de combustion et le carter 30 de support du distributeur, une virole 26 de forme conique qui comporte une portée sphérique 27 à l'aval en appui sur une portée du carter 30 de support du distributeur 20 et une portée sphérique 28 à l'amont en appui sur une partie 29 de la virole 16 du mélangeur externe 15.

La virole d'étanchéité 26 peut également présenter une forme cylindrique ou sphérique, de même que les portées 27, 28 peuvent être cylindriques.

La virole 26 présente un faible coefficient de dilatation, inférieur à celui de la virole 16 du mélangeur externe et du support de distributeur 30. La virole 26 est montée avec un certain jeu sur la portée du support de distributeur 30 et de la bride 29 de la chambre de combustion ; les épaulements 41, 42 ont pour fonction de limiter le coulissement axial de la virole 26 et de s'opposer à un déboîtement accidentel.

La contraction relative de la virole 26 par rapport au support de distributeur 30 et à la bride 29 de la chambre de combustion d'autre part, peut être parfaitement homogène, l'anneau se déformant concentriquement à lui-même.

Dans le cas où l'un des deux organes de support, notamment la chambre, se dilate plus que l'autre, il y a effectivement basculement autour des portées 27 ou 28 ; l'anneau se déforme alors en parapluie.

Le montage peut s'effectuer à chaud, de telle sorte que la virole 26 soit dilatée puis frettée sur les diamètres du distributeur et de la chambre.

Lors d'un montage à froid de la virole 26, les jeux sont calculés pour permettre un montage glissant de la virole 26 sur le distributeur et de la chambre dans la virole. La virole d'étanchéité 26 est glissée sur la portée cylindrique du support de distributeur 30 ; la bride 29 de la chambre de combustion est alors emboîtée dans le diamètre interne de la virole 26. Enfin les brides 9 et 10 du carter sont solidarisées par boulonnage.

L'étanchéité est imparfaite au démarrage, mais le distributeur 20 et la chambre de combustion se dilatant très vite, la virole 26 se referme rapidement et assure l'étanchéité.

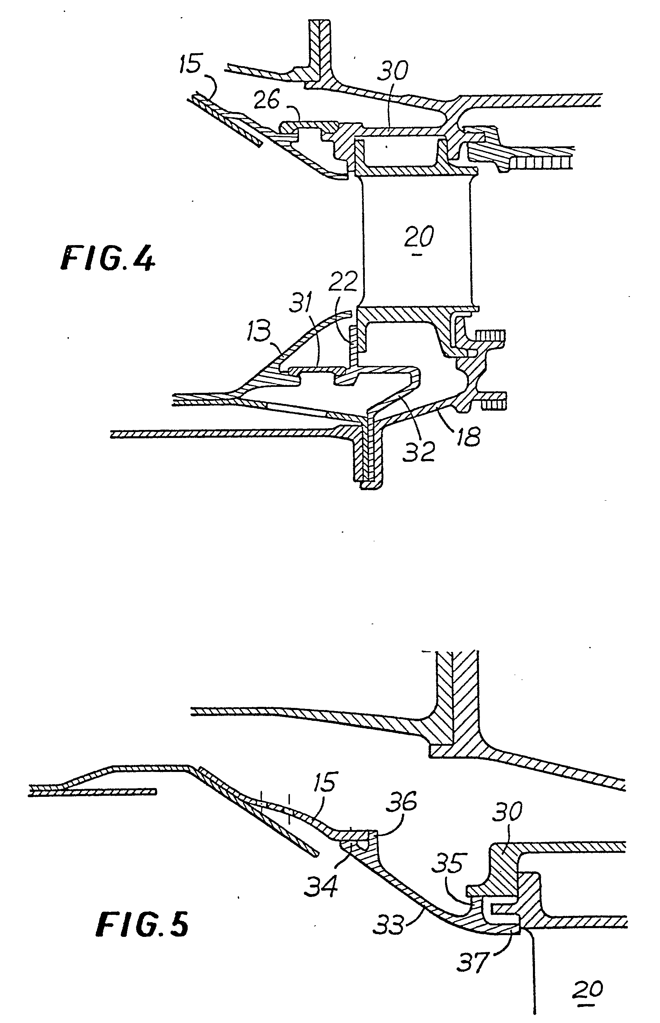

A la figure 4, on a représenté une variante de réalisation du dispositif d'étanchéité, dans lequel en dehors de la virole 26 disposée entre le mélangeur externe 15 et le support 30 du distributeur, il est prévu une autre virole 31 disposée contre le mélangeur interne 13 de la chambre de combustion et une bride 32 solidaire du porte-labyrinthe 18.

Dans le mode de réalisation représenté à la figure 5, une virole 33 est disposée de façon interne aux portées du support 30 de distributeur et au mélangeur externe 15 de la chambre de combustion. Dans ce cas, la virole 33 a un coefficient de dilatation supérieur à celui des deux éléments 15 et 30 qu'elle réunit.

Comme dans l'exemple précédent, la virole 33 est munie de portées 34 et 35 et de butées 36, 37, en appui contre la chambre de combustion et le support de distributeur 30.

De cette manière, lors d'une dilatation thermique de la virole 33, il se produit un serrage sur les deux éléments qu'elle réunit.

Bien entendu, diverses modifications peuvent être apportées par l'homme de l'art aux dispositifs ou procédés qui viennent d'être décrits uniquement à titre d'exemples non limitatifs, sans sortir du cadre de l'invention.

**Revendications**

1. Dispositif d'étanchéité entre deux éléments de turbomachine traversée par des gaz, notamment entre une chambre de combustion (12) et un support de distributeur haute pression, ce dispositif comportant une virole indépendante prenant appui par des portées respectivement sur les éléments à relier de façon étanche, les deux éléments de turbomachine étant sensiblement coaxiaux et espacés axialement pour constituer un premier ensemble, et ladite virole constituant un second ensemble s'étendant coaxialement au premier ensemble sur une longueur supérieure à celle de l'espace séparant les deux éléments du premier ensemble, caractérisé en ce que ladite virole (26, 31, 33) est réalisée en un matériau dont le coefficient de dilatation thermique diffère de celui des éléments constituant le premier ensemble de telle sorte que celui des ensembles qui est placé extérieurement présente un coefficient de dilatation thermique inférieur à celui de l'ensemble placé à son intérieur et produit sur celui-ci, à la température de fonctionnement, un effort de serrage par l'intermédiaire de portées radiales (27, 28 ; 34, 35) de la virole, prenant appui respectivement sur les éléments (16) et (30) à relier de façon étanche.

2. Dispositif suivant la revendication 1, caractérisé en ce que l'ensemble placé extérieurement est constitué par la virole (26, 31) prenant appui par des portées (27) et (28) sur les éléments du premier ensemble, la virole (26, 31) étant réalisée en un matériau dont le coefficient de dilatation thermique est inférieur à celui des éléments du premier ensemble.

3. Dispositif suivant la revendication 1, caractérisé en ce que l'ensemble placé extérieurement est constitué par le premier ensemble, la virole (33) placée intérieurement étant réalisée en un matériau de coefficient de dilatation thermique supérieur à celui des éléments du premier ensemble, et prenant appui par des portées (34, 35) respectivement sur les éléments du premier ensemble, à savoir la virole du mélangeur (15) de la chambre de combustion et un carter (30) de support du distributeur.

4. Dispositif suivant l'une quelconque des revendications 1 à 3, caractérisé en ce que la virole (26, 33, 31) comporte à l'amont et à l'aval des portées radiales dont la surface est arrondie.

5. Dispositif suivant la revendication 2, caractérisé en ce que la virole d'étanchéité (26, 31) est dilatée à chaud puis frettée sur la chambre de combustion et sur le carter de support du distributeur maintenus à froid.

6. Dispositif suivant l'une quelconque des revendications 1 à 3, caractérisé en ce que la virole d'étanchéité (26, 31, 33) est montée à froid avec des jeux permettant un montage glissant de la virole par rapport au support de distributeur et au mélangeur de la chambre de combustion.

## Claims

1. Sealing device between two elements of a turbo-machine traversed by gases, particularly between a combustion chamber (12) and a high pressure inlet nozzle guide carrier, the device comprising an independent annular member resting on seatings respectively on the members to be connected in a sealed manner, the two elements of the turbo-machine being substantially coaxial and axially spaced in order to constitute a first assembly, and the said annular member constituting a second assembly extending coaxially with respect to the first assembly over a length in excess of that of the space separating the two members of the first assembly, characterised in this that the said annular member (26, 31, 33) is made of a material of which the coefficient of thermal expansion differs from that of the members constituting the first assembly in such a manner that one of the assemblies which is disposed externally has a coefficient of thermal expansion less than that of the assembly disposed in its interior and exerts on the latter, at the operating temperature, a locking force through the intermediary of radial seatings (27, 28 ; 34, 35) of the annular member, resting respectively on the members (16) and (30) to be connected in a sealed manner.

2. Device according to claim 1, characterised in this that the assembly located externally is constituted by the annular member (26, 31) resting through seatings (27) and (28) on the members of the first assembly, the annular member (26, 31) being made of a material of which the coefficient of thermal expansion is less than that of the members of the first assembly.

3. Device according to claim 1, characterised in this that the assembly located externally is constituted by the first assembly, the annular member (33) disposed internally being made of a material having a coefficient of thermal expansion higher than that of the members of the first assembly, and resting through seatings (34, 35) respectively on the members of the first assembly, namely the annular member of the mixer (15) of the combustion chamber and a housing (30) of the carrier of the inlet guide nozzles.

4. Device according to any one of claims 1 to 3, characterised in this that the annular member (26, 33, 31) comprises upstream and downstream radial seatings of which the surface is arcuate.

5. Device according to claim 2, characterised in this that the annular sealing member (26, 31) is expanded when hot then bound on to the combustion chamber and on to the housing of the support of the inlet guide nozzle maintained cold.

6. Device in accordance with any one of claims 1 to 3, characterised in this that the annular sealing member (26, 31, 33) is mounted when cold with clearances enabling a sliding assembly of the annular member with respect to the carrier of the inlet guide nozzle and with respect to the mixer of the combustion chamber.

## Ansprüche

1. Dichtungsvorrichtung zwischen zwei Teilen einer Turbo-maschine, insbesondere zum Abdichten der Teile zwischen einer Brennkammer (12) und einem Hochdruckleitapparatträger, mit einem selbständigen Ring, der sich mit Auflageflächen dichtend an den zugeordneten, zu verbindenden Teilen abstützt, wobei die beiden Teile mit axialem Abstand voneinander im wesentlichen koaxial liegen und einen ersten Aufbau bilden, und wobei der genannte Ring einen zweiten Aufbau darstellt, der sich koaxial zu dem ersten Aufbau über eine Länge erstreckt, die größer ist als der Zwischenraum zwischen den beiden Teilen des ersten Aufbaus, dadurch gekennzeichnet, daß der Ring (26, 31, 33) aus einem Werkstoff besteht, dessen Wärmeausdehnungskoeffizient sich in der Weise von demjenigen der den ersten Aufbau bildenden Teile unterscheidet, daß der außenliegende Aufbau einen niedrigeren Wärmeausdehnungskoeffizienten besitzt als der innenliegende Aufbau und auf diesen bei Betriebstemperatur eine Klemmkraft mit Hilfe von radialen Auflageflächen (27, 28 ; 34, 35) des Ringes ausübt, die sich auf jeweils einem der dichtend miteinander zu verbindenden Teile (16) und (30) abstützen.

2. Dichtungsvorrichtung nach Anspruch 1, dadurch gekennzeichnet, daß der außenliegende Aufbau von dem Ring (26, 31) gebildet wird, der sich mit Auflageflächen (27) und (28) an den Teilen des ersten Aufbaus abstützt, und daß der Ring (26, 31) aus einem Werkstoff besteht, dessen Wärmeausdehnungskoeffizient niedriger ist als derjenige der Teile des ersten Aufbaus.

3. Dichtungsvorrichtung nach Anspruch 1, dadurch gekennzeichnet, daß der außenliegende Aufbau aus dem ersten Aufbau besteht, und daß der innenliegende Ring (33) aus einem Werkstoff hergestellt ist, dessen Wärmeausdehnungskoeffizient höher ist, als derjenige der Teile des ersten Aufbaus, und sich mit Auflageflächen (34, 35) auf den zugeordneten Teilen des ersten Aufbaus abstützt, nämlich dem Ring des Brennkammermantels (15) und einem Gehäuse (30) des Leitapparatträgers.

4. Dichtungsvorrichtung nach einem der Ansprüche 1 bis 3, dadurch gekennzeichnet, daß der Ring (26, 33, 31) stromauf und stromabgerichtet radiale Auflageflächen mit abgerundeten Auflagezonen aufweist.

5. Dichtungsvorrichtung nach Anspruch 2, dadurch gekennzeichnet, daß der Abdichtungsring (26, 31) warmgedehnt und dann auf die Brennkammer und auf das Gehäuse des Leitapparatträgers, die kalt belassen sind, aufgeschrumpft ist.

6. Dichtungsvorrichtung nach einem der Ansprüche 1 bis 3, dadurch gekennzeichnet, daß der Abdichtungsring (26, 31, 33) kalt mit solchem Spiel montiert ist, daß eine gleitende Befestigung des Ringes auf dem Leitapparatträger und auf dem Brennkammermantel möglich ist.

FIG.1

FIG.2

FIG.3

**FIG.4**

**FIG.5**

2